Europäisches Patentamt

European Patent Office

Office européen des brevets

(11) Veröffentlichungsnummer: **0 266 751 B1**

(12) **EUROPÄISCHE PATENTSCHRIFT**

(45) Veröffentlichungstag der Patentschrift: **13.01.93**

(51) Int. Cl.5: **H04B 14/04**

(21) Anmeldenummer: **87116197.2**

(22) Anmeldetag: **04.11.87**

(54) Verfahren und System zur digitalen Signalverarbeitung.

(30) Priorität: **07.11.86 DE 3638006**

(43) Veröffentlichungstag der Anmeldung:
**11.05.88 Patentblatt 88/19**

(45) Bekanntmachung des Hinweises auf die
Patenterteilung:
**13.01.93 Patentblatt 93/02**

(84) Benannte Vertragsstaaten:
**AT DE GB**

(56) Entgegenhaltungen:
**FR-A- 2 443 768**
**US-A- 2 669 608**

**PATENT ABSTRACTS OF JAPAN, Band 10, Nr. 79 (E-391)[2136], 28. März 1986; & JP-A-60 223 347**

**PATENT ABSTRACTS OF JAPAN, Band 5, Nr. 63 (E-54)[735], 28. April 1981; & JP-A-56 12 144**

(73) Patentinhaber: **ANT Nachrichtentechnik GmbH**
**Gerberstrasse 33**
**W-7150 Backnang(DE)**

(72) Erfinder: **Baudisch, Werner, Dipl.-Ing.**
**Am Söhlberg 3**
**W-3341 Denkte 1(DE)**

## Beschreibung

Die Erfindung betrifft ein Verfahren nach dem Oberbegriff des Patentanspruches 1 und ein System zur Durchführung des Verfahrens nach dem Oberbegriff des Patentanspruches 4.

Bei Systemen zur komplexen digitalen PCM-Audiosignalverarbeitung, wie z.B. bei digitalen Effektgeräten, digitalen Mischpulten, ist die innere Signalwortbreite (Anzahl der intern verarbeiteten Quantisierungsschritte) in der Regel größer als die Wortbreite der an die Systeme angeschlossenen Schnittstellen.

So weisen digitale Tonmischpulte derzeit innere Wortbreiten von 24 bis 40 Bit auf, während die Wortbreite der Schnittstellen derzeit auf 16 Bit begrenzt ist.

Üblicherweise sind die Schnittstellen an die höherwertigen Bits (MSBs) des Systems zur digitalen Audiosignalverarbeitung angeschlossen.

Als Schnittstellen kommen insbesondere in Betracht:
Als Eingangsschnittstellen:
Serielle digitale Eingangsschnittstellen,
parallele digitale Eingangsschnittstellen,
Analog/Digital-Wandler;
Als Ausgangsschnittstellen:
Serielle digitale Ausgangsschnittstellen,
parallele digitale Ausgangsschnittstellen,
Digital/Analog-Wandler.

Dabei dienen die digitalen Ausgangsschnittstellen folgenden Zwecken:
D/A-Wandler:
Als Ausgangsschnittstelle mit analogem Ausgang für Abhörzwecke und für analoge Weiterverarbeitung.

Digitale Schnittstellen:
Als Schnittstellen zur digitalen Weiterverarbeitung (externe digitale Geräte, digitale Übertragungsleitungen) und als Schnittstellen zur Speicherung digitaler Signale auf digitalen Magnetbandgeräten, Compact-Discs etc..

Weiterhin besitzen Systeme zur digitalen Audiosignalverarbeitung in der Regel Elemente, die es gestatten, das digitale Signal, das einem analogen Eingangspegel entspricht, digital zu verringern, was einer Absenkung des Pegels in einem analogen System entspricht. Solche Elemente sind z.B. digital realisierte Pegelsteller, Panorama-Potentiometer in der Nähe ihrer Extremalstellungen sowie Regelverstärker in gewissen Betriebszuständen.

Beim Betrieb solcher Systeme treten Effekte auf, die beim Abhören des verarbeiteten Signals sehr störend sind. Während nämlich bei einer Großsignalaussteuerung ein Quantisierungsgeräusch auftritt, das über alle Frequenzen gleichmäßig verteilt ist (weißes, nicht mit dem Eingangssignal korrelierendes Rauschen), erscheint bei stark reduziertem Pegel ein Quantisierungsgeräusch, das mit dem Eingangssignal korreliert ist und im Grenzfall nur noch aus Oberwellen des Eingangssignales besteht. Außerdem kann es bei ungünstiger Eingangsfrequenz auch noch zu Mischprodukten außerhalb des Nutzfrequenzbandes kommen. Vergrößert man die Dämpfung so weit, bis sich an der Ausgangsschnittstelle kein Bit mehr ändert, so tritt anstelle des korrelierten Quantisierungsgeräusches das Ruhegeräusch des an die Schnittstelle angeschlossenen Kanals auf, also in der Regel wieder ein weißes Rauschen, das allerdings, z.B. für den Fall, daß der Ausgangskanal ein Digital/Analog-Wandler ist, um einige 10 dB unter dem Quantisierungsgeräusch liegen kann.

Es ist Aufgabe der Erfindung, die störende Korrelation des Quantisierungsgeräusches bei starker Dämpfung zu vermindern.

Diese Aufgabe wird gelöst durch das Verfahren mit den Merkmalen des Patentanspruches 1 und das System mit den Merkmalen des Patentanspruches 4. Vorteilhafte Weiterbildungen der Erfindung sind in den Unteransprüchen angegeben.

Folgende Überlegungen liegen der Erfindung zugrunde: Wird eine über eine Eingangsschnittstelle in ein digitales System eingespeiste Audioinformation im Pegel gedämpft, so bleibt infolge der hohen inneren Wortbreite des digitalen Systems zunächst der gesamte Informationsgehalt des Eingangssignals erhalten. Wird ein im Pegel reduziertes Signal allerdings über eine Ausgangsschnittstelle gegeben, so erfolgt durch die im Verhältnis zur Systemwortbreite geringere Schnittstellenwortbreite ein Abschneiden niederwertiger Bits.

Sind nun der Eingangspegel und der Dämpfungsfaktor so, daß an der Ausgangsschnittstelle nur noch die niedrigstwertigen Bits (LSB's) sich verändern, so verändert sich das Frequenzspektrum des Quantisierungsgeräusches des digitalisierten Signals. Es tritt eine Korrelation zwischen dem Quantisierungsgeräusch und dem Eingangssignal auf. Im Grenzfall, wenn sich aufgrund starker Dämpfung nur noch ein Bit des digitalisierten Signals ändert, wenn also aus einem sinusförmigen Eingangssignal ein Rechtecksignal geworden ist, besteht das Quantisierungsgeräusch nur noch aus Oberwellen des Eingangssignals.

Überraschenderweise läßt sich die Korrelation dadurch vermindern, daß innerhalb des Systems, das zur digitalen Signalverarbeitung dient, signalflußmäßig hinter der Stelle, an welcher die Dämpfung des Eingangssignals erfolgt, zum gedämpften Signal ein Hilfssignal addiert wird, dessen Amplitude so gewählt ist, daß sich eine hinter dieser Additionsstelle befindliche Ausgangsschnittstelle allein durch das Hilfssignal immer im Bereich einer Aussteuerung von mehreren Bits befindet. Dies hat zur Folge, daß am Ausgang dieser Schnittstelle ein vom Nutzsignal und dessen weiterer Behandlung unabhängiges, weißes Rauschsignal erscheint.

Die oben angegebenen Verhältnisse sind in einem 16-Bit-System etwa dann angegeben, wenn eine Aussteuerung durch ein Hilfssignal von 4-6 LSBs (niedrigstwertigen Bits) erfolgt. Die hierbei sich ergebende Reduzierung der Aussteuerungsgrenze von weniger als 1 Promille ist in praktischen Systemen ohne Belang.

Um durch das Hilfssignal keine weitere als die oben angegebene Wirkung zu erzielen, insbesondere kein Störgeräusch und keine Verringerung des Signal-Rauschabstandes bei "normaler" Aussteuerung, muß das Hilfssignal bei dem angegebenen Amplitudenbereich in einem Frequenzbereich liegen, in dem es nicht störend in Erscheinung tritt.

Hierfür ist in Systemen zur digitalen Audiosignalverarbeitung der oberhalb des Nutzfrequenzbandes liegende und unter Berücksichtigung der Beschränkungen durch das Abtasttheorem symmetrisch um die Hälfte der Abtastfrequenz angeordnete Frequenzbereich nutzbar.

Signale in diesem Frequenzbereich werden spätestens im Rekursionstiefpaß eines nachgeschalteten Digital/Analog-Wandlers herausgefiltert, so daß sie nicht störend in Erscheinung treten.

Als Hilfssignal ist theoretisch jede darstellbare Signalform, die den oben angegebenen Einschränkungen genügt, möglich, was praktisch eine Beschränkung auf zwei Möglichkeiten oder auf deren Kombination bedeutet:

1. Ein sinusförmiges Hilfssignal im Bereich Fn < Fh < (Fs-Fn) mit Fn = höchste Nutzfrequenz, Fh = Hilfsfrequenz, Fs = Samplingfrequenz (Abtastfrequenz);

2. ein Schmalbandrauschsignal mit den Bandgrenzen

$$Fn < Fr < (Fs-Fn)$$

mit Fr = Rauschsignalfrequenz,
wobei die Amplitudenverteilung des Rauschsignals so zu wählen ist, daß mit dem Rekursionstiefpaß alle Basisband- und Aliasingfrequenzen des Rauschsignals unterdrückt werden.

In Systemen, in denen ein analoger Rekursionstiefpaß verwendet wird (z.B. D/A-Wandler ohne Oversampling) ist hierbei der Möglichkeit 2 der Vorzug zu geben, da schon durch geringste Nichtlinearitäten bei Verwendung eines sinusförmigen Hilfssignals störende Mischprodukte mit der Samplingfrequenz entstehen können, die selbst dann hörbar sind, wenn ihre Amplitude unter dem Rauschpegel liegt. Bei Verwendung eines rauschförmigen Hilfssignals sind die Mischprodukte dagegen ebenfalls rauschförmig und werden verdeckt.

In Systemen, in denen ein digitaler Rekursionstiefpaß verwendet wird, kann auch die Möglichkeit 1 benutzt werden, desgleichen, wenn in einem nachfolgenden digitalen System die Hilfsfrequenz digital herausgefiltert wird.

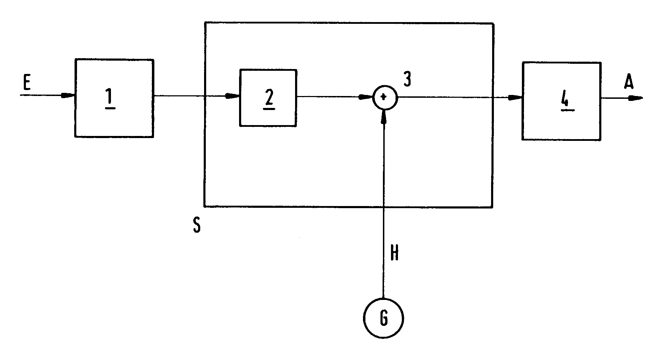

Nicht unerwähnt bleiben soll, daß es zur Verbesserung des Rauschverhaltens von Analog/Digital-Wandlern schon bekannt ist, einem Analogsignal vor der Wandlung Rauschsignale hinzuzuaddieren (DE-AS 1 157 652). Zusätzlich ist in der DE-OS 28 40 243, Figur 2, angegeben, daß zum gleichen Zweck auch unmittelbar hinter einem A/D-Wandler ein digitales Hilfssignal zugeführt werden kann. Im Gegensatz hierzu beschäftigt sich die Erfindung mit Vorgängen in demjenigen Teil eines digitalen Signalverarbeitungssystems, in welchem lediglich digitale Signale auftreten, deren Signalwortbreite eine Reduktion erfährt. Wenn dementsprechend die Erfindung auch eine andere Zielrichtung hat als der erwähnte Stand der Technik, so ist dadurch nicht ausgeschlossen, daß bei einem beispielsweise als Eingangsschnittstelle verwendeten A/D-Wandler die bekannten Maßnahmen zur Rauschverminderung zusätzlich anwendbar sind.

In der Figur ist schematisch ein Ausführungsbeispiel für ein System nach der Erfindung dargestellt.
Eingangssignale E gelangen in eine Eingangsschnittstelle 1, beispielsweise einen A/D-Wandler. Von dort werden die inzwischen digitalen Signale einem System S zugeführt, das eingangsseitig ein digitales Dämpfungselement 2 aufweist.

Dessen digitale Ausgangssignale haben eine größere Wortbreite als die Ausgangssignale der Eingangsschnittstelle 1. In einer digitalen Additionsstelle 3 wird den Ausgangssignalen des digitalen Dämpfungselementes 2 ein Hilfssignal H hinzuaddiert, das von einem Generator G geliefert wird. Das Summensignal verläßt das System S über eine Ausgangsschnittstelle 4, beispielsweise einen Digital/Analog-Wandler, der Ausgangssignale A abgibt.

Zur Generierung des Hilfssignals können folgende Verfahren angewendet werden.

1. Das Hilfssignal wird analog erzeugt und nach einer A/D-Wandlung dem System S digital zur Verfügung gestellt.

2. Das Hilfssignal wird durch ein digitales Verfahren erzeugt (digitaler Sinus- bzw. Rauschgenerator und eventuelle nachträgliche digitale Filterung).

3. Das Hilfssignal wird in einer digitalen Tabellenform gespeichert und zyklisch ausgelesen.

Mit Hilfe des erfindungsgemäßen Verfahrens bzw. des erfindungsgemäßen Systems lassen sich folgende Vorteile erreichen:
Das Frequenzspektrum des Rauschsignals am Ausgang des Systems ist weitgehend unabhängig von der Amplitude des am Ausgang anstehenden Nutzsignals. Es läßt sich außerdem nachweisen, daß mit Hilfe des Verfahrens nach der Erfindung auch Signale über die Ausgangsschnittstelle übertragbar sind, deren Amplitude so gering ist, daß ohne das erfindungsgemäße Verfahren keine Übertragung mehr stattfinden würde. Die Pegel dieser Signale liegen dann zwar unterhalb des Rauschpegels, sind jedoch noch hörbar.

**Patentansprüche**

1. Verfahren zur digitalen Signalverarbeitung in einem System, in welchem sich die Signalwortbreite vergrößert, wobei einer Systemausgangsschnittstelle (4) von der vergrößerten Signalwortbreite nur die höherwertigen Bits zugeführt werden, dadurch gekennzeichnet, daß im Signalfluß hinter der Stelle (2), wo sich die Signalwortbreite vergrößert, aber vor der Systemausgangsschnittstelle (4) dem digitalen Signal ein digitales Hilfssignal (H) hinzuaddiert wird,
    a) dessen Frequenz oberhalb der höchsten Nutzfrequenz in einem symmetrisch um die Hälfte der Abtastfrequenz angeordneten Frequenzbereich liegt und
    b) dessen Amplituden so gewählt sind, daß schon auf Grund des Hilfssignales allein Bits über die Systemausgangsschnittstelle (4) abgegeben werden.

2. Verfahren nach Anspruch 1, dadurch gekennzeichnet, daß das Hilfssignal (H) ein Sinussignal ist.

3. Verfahren nach Anspruch 1, dadurch gekennzeichnet, daß das Hilfssignal ein bandbegrenztes Rauschsignal ist.

4. Verfahren nach Anspruch 1, dadurch gekennzeichnet, daß das Hilfssignal (H) eine Kombination aus einem Sinussignal und einem bandbegrenzten Rauschsignal ist.

5. System zur digitalen Signalverarbeitung, in welchem sich die Signalwortbreite vergrößert, wobei der Systemausgangsschnittstelle (4) von der vergrößerten Signalwortbreite nur die höherwertigen Bits zugeführt sind, zur Durchführung des Verfahrens nach Anspruch 1, dadurch gekennzeichnet, daß ein Hilfssignalgenerator (G) für ein digitales Hilfssignal (H) vorgesehen ist,
    a) dessen Frequenz oberhalb der höchsten Nutzfrequenz in einem symmetrisch um die Hälfte der Abtastfrequenz angeordneten Frequenzbereich liegt und
    b) dessen Amplituden so gewählt sind, daß schon aufgrund des Hilfssignales allein Bits über die Systemausgangsschnittstelle (4) abgegeben werden, und
daß sich im Signalfluß hinter der Stelle (2), wo sich die Signalwortbreite vergrößert, aber vor der Systemausgangsschnittstelle (4) eine digitale Additionsstelle (3) für das Hilfssignal (H) und das Signal mit der vergrößerten Signalwortbreite befindet.

6. System nach Anspruch 5, dadurch gekennzeichnet, daß das Hilfssignal (H) ein Sinussignal ist.

7. System nach Anspruch 5, dadurch gekennzeichnet, daß das Hilfssignal (H) ein bandbegrenztes Rauschsignal ist.

8. System nach Anspruch 5, dadurch gekennzeichnet, daß das Hilfssignal (H) eine Kombination aus einem Sinussignal und einem bandbegrenzten Rauschsignal ist.

**Claims**

1. Method for the digital signal processing in a system, in which the signal word width increases, wherein only the higher valency bits of the increased signal word width are fed to a system output interface (4), characterised thereby, that an auxiliary digital signal (H),
    a) the frequency of which lies above the highest desired frequency in a frequency range arranged symmetrically about half the scanning frequency and
    b) the amplitudes of which are so chosen that bits are delivered by way of the system output interface (4) solely by reason of the auxiliary signal on its own,
    is added to the digital signal in the signal flow behind the point (2), where the signal word width increases, but before the system output interface (4).

2. Method according to claim 1, characterised thereby, that the auxiliary signal (H) is a sinusoidal signal.

3. Method according to claim 1, characterised thereby, that the auxiliary signal is a noise signal of limited band width.

4. Method according to claim 1, characterised thereby, that the auxiliary signal (H) is a combination of a sinusoidal signal and a noise signal of limited band width.

5. System for the digital signal processing, in which the signal word width increases, wherein only the higher valency bits of the increased signal word width are fed to the system output interface (4), for the performance of the method according to claim 1, characterised thereby, that an auxiliary signal generator (G) is provided for an auxiliary digital signal (H),

a) the frequency of which lies above the highest desired frequency in a frequency range arranged symmetrically about half the scanning frequency and

b) the amplitudes of which are so chosen that bits are delivered by way of the system output interface (4) solely by reason of the auxiliary signal on its own and that

a digital addition point (3) for the auxiliary signal (H) and the signal with the increased signal word width is disposed in the signal flow behind the point (2), where the signal word width increases, but before the system output interface (4).

6. System according to claim 5, characterised thereby, that the auxiliary signal (H) is a sinusoidal signal.

7. System according to claim 5, characterised thereby, that the auxiliary signal (H) is a noise signal of limited band width.

8. System according to claim 5, characterised thereby, that the auxiliary signal (H) is a combination of a sinusoidal signal and a noise signal of limited band width.

**Revendications**

1. Procédé de traitement numérique de signaux dans un système dans lequel la largeur de mot de signal augmente, et dans lequel une interface de sortie (4) d'un système ne reçoit que les bits ayant les plus forts poids de la largeur de mot de signal agrandie, caractérisé par le fait que, dans le flux de signaux, derrière l'endroit (2) où la largeur de mot de signal augmente, toutefois avant l'interface de sortie (4) du système, on ajoute un signal numérique auxiliaire (H),

a) dont la fréquence est supérieure à la plus haute fréquence utile dans un domaine de fréquences situé symétriquement à l'entour de la moitié de la fréquence d'échantillonnage, et

b) dont les amplitudes sont choisies de manière que ce signal auxiliaire soit déjà à lui seul une base suffisante pour que des bits soient émisvia l'interface de sortie (4) du système.

2. Procédé selon revendication 1, caractérisé par le fait que le signal auxiliaire (H) est un signal sinusoïdal.

3. Procédé selon revendication 1, caractérisé par le fait que le signal auxiliaire est un signal de bruit à bande limitée.

4. Procédé selon revendication 1, caractérisé par le fait que le signal auxiliaire (H) est une combinaison d'un signal sinusoïdal et d'un signal de bruit à bande limitée.

5. Système de traitement numérique de signaux dans lequel la largeur de mot de signal augmente et seuls les bits ayant les plus forts poids de la largeur de mot agrandie sont fournis à l'interface de sortie (4) du système, pour mettre en oeuvre le procédé selon revendication 1, caractérisé par le fait qu'il est prévu un générateur (G) de signal auxiliaire, pour générer un signal auxiliaire numérique (H),

a) dont la fréquence se situe au-dessus de la plus haute fréquence utile dans un domaine de fréquences situé symétriquement à l'entour de la moitié de la fréquence d'échantillonnage; et

b) dont les amplitudes sont choisies de manière que le signal auxiliaire soit déjà à lui seul une base suffisante pour que des bits soient émis via l'interface de sortie (4) du système, et

par le fait que, dans le flux de signaux, derrière l'endroit (2) où la largeur de mot de signal augmente, toutefois avant l'interface de sortie (4) du système, il y a un lieu d'addition numérique pour l'addition du signal auxiliaire (H) et du signal à largeur de mot agrandie.

6. Système selon revendication 5, caractérisé par le fait que le signal auxiliaire (H) est un signal sinusoïdal.

7. Système selon revendication 5, caractérisé par le fait que le signal auxiliaire (H) est un signal de bruit à bande limitée.

8. Système selon revendication 5, caractérisé par le fait que le signal auxiliaire (H) est une combinaison d'un signal sinusoïdal et d'un signal de bruit à bande limitée.

E → | 1 |

S

| 2 | → (+) 3 → | 4 | → A

H

(G)